# EUROPEAN PATENT APPLICATION

(11) **EP 2 538 717 A1**
(43) Date of publication of application: **26.12.2012**
(21) Application number: 11742353.3
(22) Date of filing: 15.02.2011
(51) Int. Cl.: H04W 28/06, H04W 72/04

(54) **MOBILE TERMINAL DEVICE AND UPLINK CONTROL INFORMATION SIGNAL TRANSMISSION METHOD**

(30) Priority: 15.02.2010 JP 2010030373
(71) Applicant: NTT DOCOMO, INC., Chiyoda-ku Tokyo 100-6150 (JP)
(72) Inventor: KISHIYAMA, Yoshihisa, Tokyo 100-6150 (JP); KAWAMURA, Teruo, Tokyo 100-6150 (JP); NISHIKAWA, Daisuke, Tokyo 100-6150 (JP)
(74) Representative: HOFFMANN EITLE
(86) International application number: PCT/JP2011/053080
(87) International publication number: WO 2011/099614

(57) **Abstract**

The present invention is provided to, when there is a PUSCH signal to transmit in the same subframe as a UCI signal, make the method of transmitting uplink control information in the LTE system adaptable to a broader system band and increase in transmission layers only by minor changes. A UCI signal is generated to a base station apparatus (20) of a mobile communication system having a system band composed of plural component carriers. The UCI signal is multiplexed to a PUSCH signal in each of component carriers where the PUSCH signal is transmitted in the same subframe as the UCI signal. The PUSCH signal to which the UCI signal is multiplexed is transmitted to the base station apparatus (20).

## Description

### TECHNICAL FIELD

The present invention relates to a mobile terminal apparatus and a method for transmitting an uplink control information signal in the next-generation mobile communication system.

### BACKGROUND ART

In the UMTS (Universal Mobile Telecommunications System) network, in order to enhance frequency usage efficiencies and to increase the data rate, it has been proposed to draw the best out of the W-CDMA (Wideband Code Division Multiple Access) based system with adoption through the adoption of HSDPA (High Speed Downlink Packet Access) and HSUPA (High Speed Uplink Packet Access). In this UMTS network, consideration is given to the LTE (Long Term Evolution) for the purpose of increasing the data rate more and reducing delay (NPL 1). In the LTE, the multiplexing scheme adopted is OFDMA (Orthogonal Frequency Division Multiple Access), different from the W-CDMA, for the downlink and SC-FDMA (Single Carrier Frequency Division Multiple Access) for the uplink.

In the 3^{rd} generation system, generally, a fixed band of 5 MHz is used to realize a maximum transmission rate of 2 Mbps in the downlink. On the other hand, in the LTE system, a variable band of 1.4 MHz to 20 MHz is used to realize a maximum transmission rate of 300 Mbps for the downlink and a maximum transmission rate of 75 Mbps for the uplink. In addition, the in the UMTS network, in order to achieve further broader band and much faster data rate, a study has been made about a succeeding system to the LTE (for example, LTE-A: LTE Advanced). Therefore, it is conceivable that these plural mobile communication systems will exist together in the future and there will be a demand for configurations which can support these systems (base station apparatuses and mobile terminal apparatuses).

### CITATION LIST

### NON-PATENT LITERATURE

Non-Patent Literature 1: 3GPP, TR25.912 (V7.1.0), "Feasibility study for Evolved UTRA and UTRAN", Sept. 2006

### SUMMARY OF THE INVENTION

### TECHNICAL PROBLEM

The present invention was carried out in view of the foregoing and aims to provide a mobile terminal apparatus corresponding to each of mixed plural mobile communication systems and a method for transmitting an uplink control information signal.

### SOLUTION TO PROBLEM

The present invention provides a mobile terminal apparatus comprising: an uplink control information signal generator configured to generate an uplink control information signal to a base station apparatus of a mobile communication system having a system band composed of a plurality of fundamental frequency blocks; a multiplexer configured to multiplex the uplink control information signal to an uplink shared data channel signal in each of all fundamental frequency blocks where the uplink shared data channel signal is transmitted in a same subframe as the uplink control information signal; and a transmitter configured to transmit to the base station apparatus the uplink shared data channel signal to which the uplink control information signal is multiplexed.

### TECHNICAL ADVANTAGES OF THE INVENTION

According to the present invention, in the mobile communication system of a system band composed of plural fundamental frequency blocks, the uplink control information signal is multiplexed to the uplink shared data channel signal and transmitted in each of all of the fundamental frequency blocks where the uplink shared data channel signals are transmitted in the same subframes. Therefore, in carrier aggregation in which plural fundamental frequency blocks are combined into a broader band, it is possible to make the plural mobile communication systems exist together only by making minor changes to the transmission method of uplink control information signals in the mobile communication system of a single fundamental frequency block.

### BRIEF DESCRIPTION OF THE DRAWINGS

Fig. 1 is a view for explaining a system band of the LTE system;
Fig. 2 is a view for explaining a method for transmitting a UCI signal in the LTE system (Release-8) ;
Fig. 3 is a view for explaining the method for transmitting the UCI signal when PUSCH is not transmitted in the LTE-A system;
Fig. 4 is a view for explaining a configuration of a mobile communication system;
Fig. 5 is a view for explaining an overall structure of a mobile terminal apparatus;
Fig. 6 is a view for explaining an overall structure of a base station apparatus;
Fig. 7 is a functional block diagram of a baseband signal processing unit provided in the mobile terminal apparatus;
Fig. 8 is a functional block diagram of a baseband signal processing unit provided in the base station apparatus;
Fig. 9 is a view for explaining a first method for transmitting the UCI signal;
Fig. 10 is a view for explaining a second method for transmitting the UCI signal; and
Fig. 11 is a view of a configuration of the UCI signal multiplexed to the PUSCH signal.

### DESCRIPTION OF EMBODIMENTS

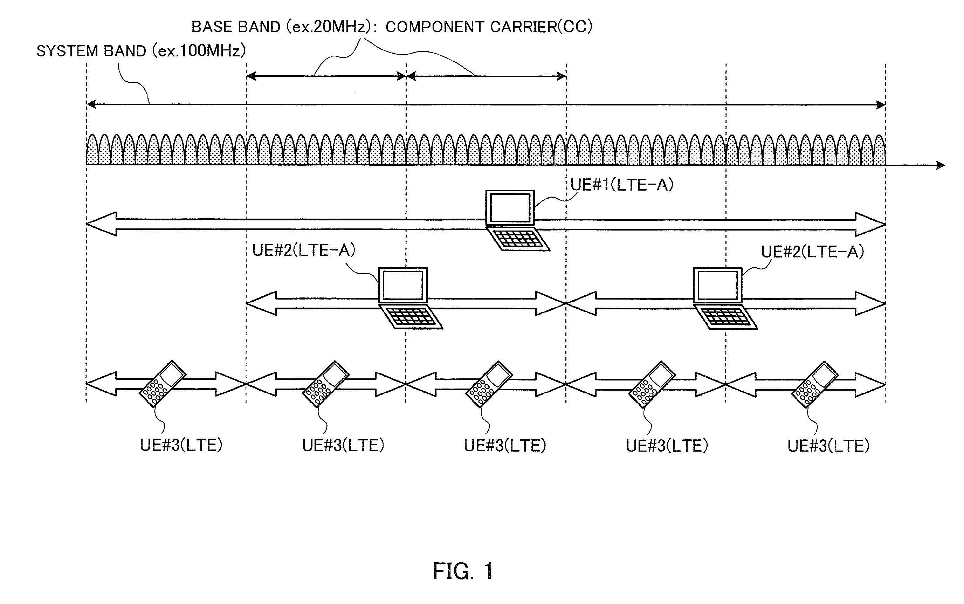

Fig. 1 is a view for explaining frequency usage in downlink mobile communications. Here, the following description is made by way of a fundamental frequency block as a component carrier. In an example of frequency usage illustrated in Fig. 1, there exist an LTE-A system as a first mobile communication system which has a relatively broader first system band composed of plural component carriers and an LTE system as a second mobile communication system which has a relatively narrower second system band (composed of one component carrier in this example). For example, the LTE-A system uses a variable system bandwidth of 100 MHz or less for radio communications and LTE system uses a variable system bandwidth of 20 MHz or less for radio communications. The system band of the LTE-A system contains at least one fundamental frequency domain (CC: Component Carrier) which unit is a system band of the LTE system. Plural fundamental frequency domains are combined to form a broader band, which is called carrier aggregation.

For example, in Fig. 1, the system band of the LTE-A system (20 MHz x 5 = 100 MHz) contains five component carrier bands each of which is the system band of the LTE system (base band: 20 MHz). In Fig. 1, a mobile terminal apparatus UE (User Equipment) #1 is a mobile terminal apparatus supporting the LTE-A system (also supporting the LTE system) and having a 100 MHz system band, a UE #2 is a mobile terminal apparatus supporting the LTE-A system (also supporting the LTE system) and having a 40 MHz system band (20 MHz x 2 = 40 MHz), and UE #3 is a mobile terminal apparatus supporting the LTE system (not supporting the LTE-A system) and having a 20 MHz system band (base band).

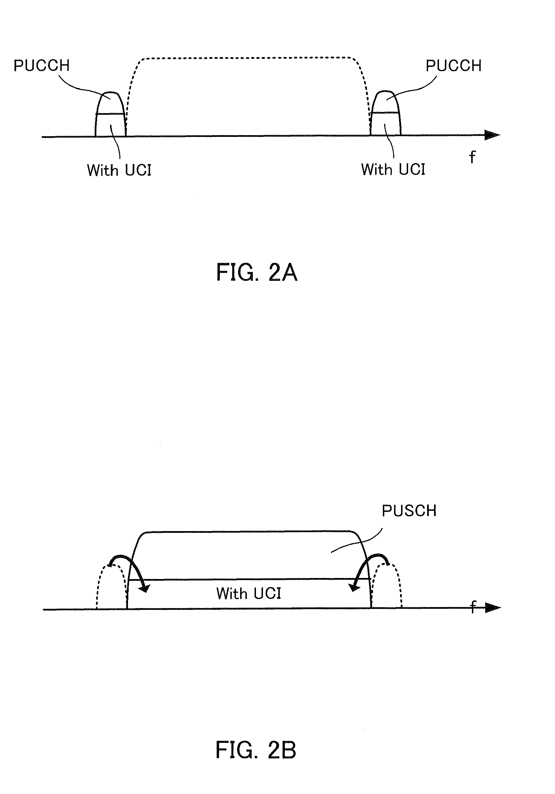

In the LTE system (Release - 8), an UCI (Uplink Control Information) signal (uplink control information signal) is transmitted from the mobile terminal apparatus UE to a base station apparatus eNB. The UCI signal is any one or combination of CQI (Channel Quality Indicator), PMI (Precoding Matrix Indicator), RI (Rank Indicator), ACK (Acknowledgement), NACK (Negative Acknowledgement) and the like. In this case, the UCI signal is, as illustrated in Fig. 2A, contained in a PUCCH (Physical Uplink Control Channel) signal and transmitted, when there is no PUSCH (Physical Uplink Shared Channel) signal to be transmitted in the same subframe. On the other hand, the UCI signal is, as illustrated in Fig. 2B, contained in the PUSCH signal and transmitted, when there is a PUSCH signal to be transmitted in the same subframe.

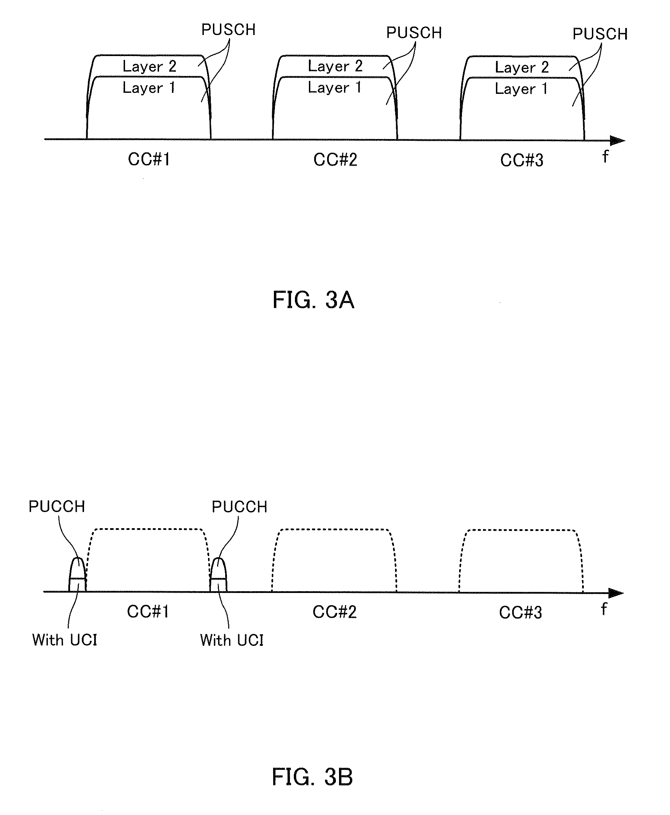

Here, consideration is also given to a method of transmitting of the UCI signal in the LTE-A system. As illustrated in Fig. 3A, in the LTE-A system, the system band is composed of plural component carriers each of which is a system band of the LTE system, the MIMO multiplexing transmission supported and the method of transmitting a UCI signal in the LTE system cannot be adopted as it is in the LTE-A system. In this case, as illustrated in Fig. 3B, it seems that the UCI signal is contained in the PUCCH signal of the UE-specific component carrier and transmitted, when there is no PUSCH signal to be transmitted in the same subframe. However, there still remains a problem of the method for transmitting a UCI signal when there is a PUSCH signal to transmit in the same subframe.

Here, the inventors made this invention in order to solve this problem. That is, the essence of the present invention is such that when there is a PUSCH signal to transmit in the same subframe as a UCI signal, minor change is given to the method for transmitting a UCI signal in the LTE system thereby to support increase in system bands and increase in transmission layers.

Hereinafter, an embodiment of the present invention will be described in detail with reference to the attached drawings. Here, the description is given by way of a configuration example where the present invention is applied to the LTE-A system, however, the present invention is not limited to this configuration. In the carrier aggregation where plural fundamental frequency blocks are combined to form a broader band, the present invention is applicable to any mobile communication system as long as an uplink control information signal is transmitted in an uplink in the mobile communication system. Here, the uplink control channel mainly used for control of an uplink is a PUCCH and the uplink shared data channel mainly used for transmission of user data in the uplink is PUSCH, however, these names are not restrictive ones.

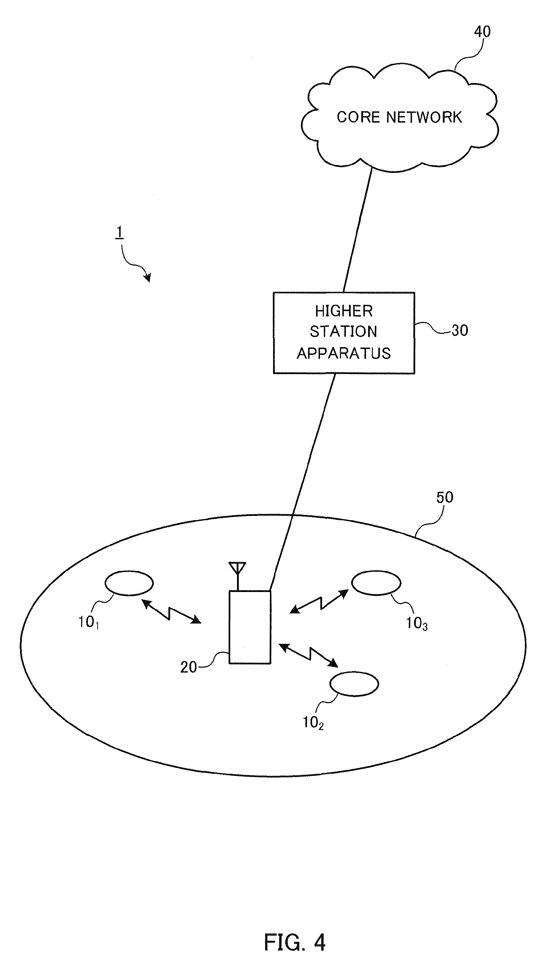

With reference to Fig. 4, description is made about a mobile communication system 1 having the mobile terminal apparatus (UE) 10 and the base station apparatus (Node B) 20 according to the embodiment of the present invention. Fig. 4 is a view for explaining the configuration of the mobile communication system 1 having the mobile terminal apparatus 10 and the base station apparatus 20 according to this embodiment. The mobile communication system 1 illustrated in Fig 4 comprises the LTE-A system as described above. The LTE-A system may be called IMT-Advanced or 4G.

As illustrated in Fig. 4, the mobile communication system 1 is configured to include the base station apparatus 20 and the plural mobile terminal apparatuses 10 (10₁, 10₂, 10₃, ..., 10ₙ, n is an integer greater than 0) which communicate with the base station apparatus 20. The base station apparatus 20 is connected to a higher station apparatus 30, which is then, connected to a core network 40. The mobile terminal apparatus 10 performs communication with the base station apparatus 20 in a cell 50. Here, the higher station apparatus 30 may include, but not limited to, an access gateway apparatus, a radio network controller (RNC), a mobility management entity (MME) and the like.

Mobile terminal apparatuses (10₁, 10₂, 10₃, ..., 10ₙ) include LTE terminals and LTE-A terminals. In the following description, these are collectively called the mobile terminal apparatus 10 unless otherwise noted. Besides, for convenience of explanation, it is the mobile terminal apparatus 10 that performs radio communications with the base station apparatus 20, however, more generally, it is a user device (UE: User Equipment) including a mobile terminal apparatus and a fixed terminal apparatus.

In the mobile communication system 1, as a wireless access scheme, OFDMA (Orthogonal Frequency Division Multiple Access) is applied to the downlink and SC-FDMA (Single-Carrier Frequency-Division Multiple. Access) is applied to the uplink. The OFDMA is a multicarrier transmission scheme in which a frequency band is divided into plural narrower frequency bands (subcarriers) and data is mapped to each subcarrier for communications. The SC-FDMA is a single-carrier transmission scheme in which a system band is divided into one or successive resource blocks for each terminal and plural terminals uses mutually difference bands thereby to reduce interference between the terminals.

Here, description is given to a communication channel in the LTE system. In the downlink, the PDSCH (Physical Downlink Shared Channel) shared between the mobile terminal apparatuses 10, a PDCCH (Physical Downlink Control Channel) as downlink control channel, a PCFICH (Physical Control Format Indicator Channel), and a PHICH (Physical Hybrid-ARQ Indicator Channel) are used. The PDSCH is mainly used for transmission of a PDSCH signal containing control information of a higher layer and downlink user data and the like. THE PDCCH is mainly used for transmission of a PDCCH signal containing scheduling information, component carrier information of component carriers allocated to mobile terminal apparatuses 10 by the base station apparatus 20 and the like.

In the uplink, the PUSCH shared between the mobile terminal apparatuses 10 and the PUCCH as uplink control channel are used. The PUSCH is mainly used for transmission of an PUSCH signal (uplink shared data channel signal) containing control information of higher layer and uplink user data and the like. The PUCCH is mainly used for transmission of a PUCCH signal containing ACK/NACK, downlink CQI, scheduling information and the like. Here, radio resources at both ends of each component carrier are allocated to the PUCCH.

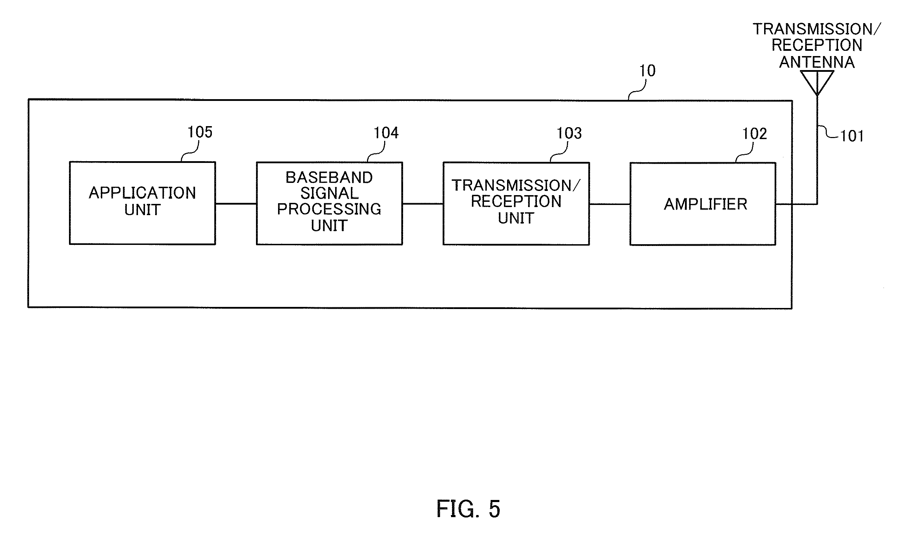

Next description is made, with reference to Fig. 5, about an overall configuration of the mobile terminal apparatus according to the present embodiment. Fig. 5 is a view illustrating the overall configuration of the mobile terminal apparatus according to the present embodiment. The mobile terminal apparatus 10 has a transmission/reception antenna 101, an amplifier 102, a transmission/reception unit 103, a baseband signal processing unit 104 and an application unit 105.

As to the downlink data, a radio frequency signal received by the transmission/reception antenna 101 is amplified by the amplifier 102, and frequency-converted to a baseband signal by the transmission/reception unit 103. This baseband signal is subjected to FFT (Fast Fourier Transform) processing, error correction decoding, reception processing of retransmission control and the like by the baseband signal processing unit 104. In this downlink data, downlink user data is transferred to the application unit 105. The application unit 105 performs processing relating to higher layers than the physical layer and MAC layer. In addition, broadcast information in the downlink data is also transferred to the application unit 105.

On the other hand, the uplink user data is input from the application unit 105 to the baseband signal processing unit 104. The data is then subjected to transmission processing of retransmission control (H-ARQ: Hybrid ARQ), channel coding, DFT (Discrete Fourier Transform) processing, IFFT (Inverse Fast Fourier Transform) processing and the like by the baseband signal processing unit 104 and transferred to the transmission/reception unit 103. In the transmission/reception unit 103, the baseband signal output from the baseband signal processing unit 104 is subjected to frequency conversion processing in which the signal is converted to a radio-frequency signal. Then, the signal is amplified by the amplifier 102 and transmitted by the transmission/reception antenna 101.

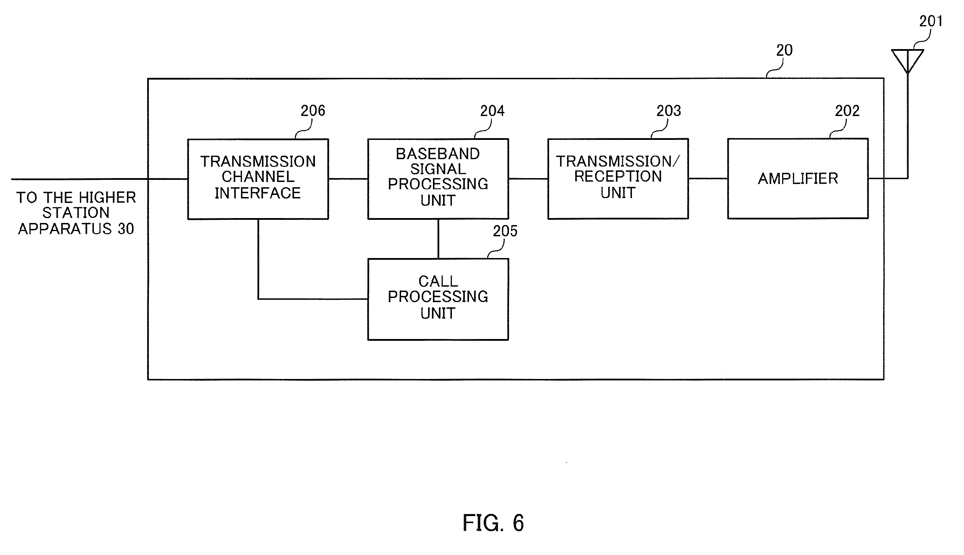

Next description is made, with reference to Fig. 6, about the overall configuration of the base station apparatus according to the present embodiment. Fig. 6 is a view illustrating the overall configuration of the base station apparatus according to the present embodiment. The base station apparatus 20 has a transmission/reception antenna 201, an amplifier 202, a transmission/reception unit 203, a baseband signal processing unit 204, a call processing unit 205 and a transmission channel interface 206.

The downlink user data is input from the higher station apparatus 30 positioned at a higher level above the base station apparatus 20, via the transmission channel interface 206 to the baseband signal processing unit 204. The baseband signal processing unit 204 performs processing of a PDCP layer, user data division and coupling, transmission processing of an RLC layer such as transmission processing of RLC (radio link control) retransmission control, MAC (Medium Access Control) retransmission control, for example, transmission processing of HARQ (Hybrid Automatic Repeat reQuest), scheduling, transmission format selection, channel coding, IFFT processing, and precoding processing.

Further, the PDCCH signal in the downlink control channel is also subjected to transmission processing such as IFFT and channel coding and transferred to the transmissionfreception unit 203. Furthermore, the baseband signal processing unit 204 gives control information for radio communications between the base station apparatus 20 and each mobile terminal apparatus 10, to the mobile terminal apparatus 10 connected to the same cell 50 by the broadcast channel. The transmission/reception unit 203 performs frequency conversion processing on the baseband signal output from the baseband signal processing unit 204, in which the signal is converted to a radio-frequency signal. Then, the signal is amplified by the amplifier 202 and transmitted by the transmission/reception antenna 201.

On the other hand, as to the uplink data, the radio-frequency signal received by the transmission/reception antenna 201 is amplified by the amplifier 202, frequency-converted to a baseband signal by the transmission/reception unit 203 and input to the baseband signal processing unit 204. In the baseband signal processing unit 204, the user data contained in the input baseband signal is subjected to the FFT processing, IDFT (Inverse Discrete Fourier Transform) processing, error correction decoding, reception processing of MAC retransmission control, reception processing of the PDCP layer and the RLC layer, and is transferred to the higher station apparatus 30 via the transmission channel interface 206. The call processing unit 205 performs call processing such as deallocation, communication channel setting, status management of the base station apparatus 20 and management of radio resources.

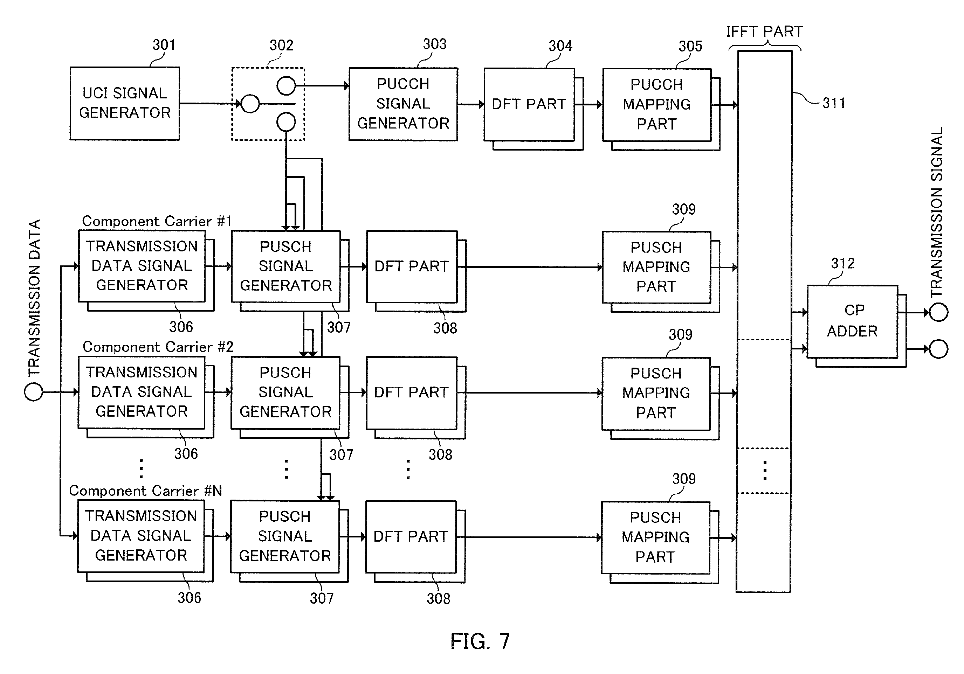

With reference to Fig. 7, description is made about the functional structure of the baseband signal processing unit provided in the mobile terminal apparatus according to the present embodiment. Fig. 7 is a functional block diagram of the baseband signal processing unit in the mobile terminal apparatus according to the present embodiment. Here, Fig. 7 is referred to about the uplink structure in which transmission signals are transmitted from the mobile terminal apparatus to the base station apparatus. Besides, illustrated in Fig. 7 is a mobile terminal configuration supporting the mobile communication system that comprises N component carriers (CC #1 to CC #N) in which two transmission layers are used in transmission.

As illustrated in Fig. 7, the baseband signal processing unit 104 has a UCI signal generator 301, a route switching part 302, a PUCCH signal generator 303, a DFT part 304 and a PUCCH mapping part 305. The UCI signal generator 301 generates a UCI signal and inputs it to the route switching part 302. The UCI signal is composed of any one of CQI, PMI, RI,ACK, NACK and the like or combination of any of them.

The route switching part 302 switches between signal channels of the UCI signal depending on whether there is a PUSCH signal of the component carrier or not. When there is no component carrier in which the PUSCH signal is transmitted in the same subframe as the UCI signal, the route switching part 302 switches to the PUCCH signal generator 303 to input the UCI signal. On the other hand, when there is a component carrier in which the PUSCH signal is transmission in the same subframe as the UCI signal, the route switching part 302 switches the destination of the UCI signal to all PUSCH signal generators (multiplexers) 307 of all component carriers to which the PUSCH signal is transmitted. In this way, as destination of the UCI signal is switched to the plural PUSCH signal generators 307 by the route switching part 302, the UCI signal is replicated in accordance with the number of component carriers (the number of transmission layers).

Here, the route switching part 302 may switch the destination of the UCI signal to a PUSCH signal generator 307 of any one transmission layer of all component carriers or PUSCH signal generators 307 of all transmission layers of all component carriers.

The PUCCH signal generator 303 generates the PUCCH signal, adds an error code to the PUCCH signal and modulates the coded PUCCH signal for each of plural subcarriers. When it receives the UCI signal from the route switching unit 30, the PUCCH signal generator 303 multiplexes the UCI signal into the PUCCH signal. The PUCCH signal generator 303 inputs the modulated PUCCH signal to the DFT part 304. The DFT part 304 performs discrete Fourier transform on the coded and modulated PUCCH signal converts it from a time-series signal to a frequency-domain signal. Then, it inputs the converted PUCCH signal to the PUCCH mapping part 305. The PUCCH mapping part 305 maps the converted PUCCH signal to radio resources.

Besides, the baseband signal processing unit 104 has a transmission data signal generator 306, a PUSCH signal generator 307, a DFT part 308 and a PUSCH mapping part 309 for each of component carriers. The transmission data signal generator 306 uses data given from a higher layer per transmission layer to generate an uplink transmission data signal containing the user data and the like, and inputs the transmission data signal to the PUSCH signal generator 307. The PUSCH signal generator 307 generates a PUSCH signal per transmission layer based on the transmission data signal, adds an error correction code to the PUSCH signal and modulates the coded PUSCH signal for each of plural subcarriers. When it receives the UCI signal from the route switching part 302, the PUSCH signal generator 307 multiplexes the transmission data signal and the UCI signal to generate the PUSCH signal. The PUSCH signal generator 307 inputs the coded and modulated PUSCH signal to the DFT part 308.

The DFT unit 308 performs discrete Fourier transform on the coded/modulated PUSCH signal and converts it from a time-series signal to a frequency-domain signal. The DFT unit 308 inputs the converted PUSCH signal to the PUSCH mapping part 309. The PUSCH mapping part 309 maps the converted PUSCH signal to radio resources of respective transmission layers.

The uplink channel signals output from the PUCCH mapping part 305 and the PUSCH mapping part 309 are input to the IFFT part 311. The IFFT part 311 performs the inverse fast Fourier transform on the plink channel signals, converts them from frequency-domain signals to time-series signals and inputs them to the CP adder 312. Here, the IFFT part 311 may be provided at each component carrier independently. The CP adder 312 inserts cyclic prefix to a time-series signal of the uplink channel signal. The cyclic prefix serves as guard interval for making up the difference due to multipath propagation delay. The uplink channel signal with the cyclic prefix added thereto is sent to the transmission/reception unit 103.

Thus, when the PUSCH signal is not transmitted in the same subframe as the UCI signal, the mobile terminal apparatus 10 multiplexes the UCI signal into the PUCCH signal of a single component carrier, which is then transmitted to the base station apparatus 20. Besides, when the PUSCH signal is transmitted in the same subframe as the UCI signal, the mobile terminal apparatus 10 multiplexes the UCI signal into PUSCH signals of all component carriers where PUSCH signals are transmitted, and the PUSCH signals are then transmitted to the base station apparatus 20 on PUSCH.

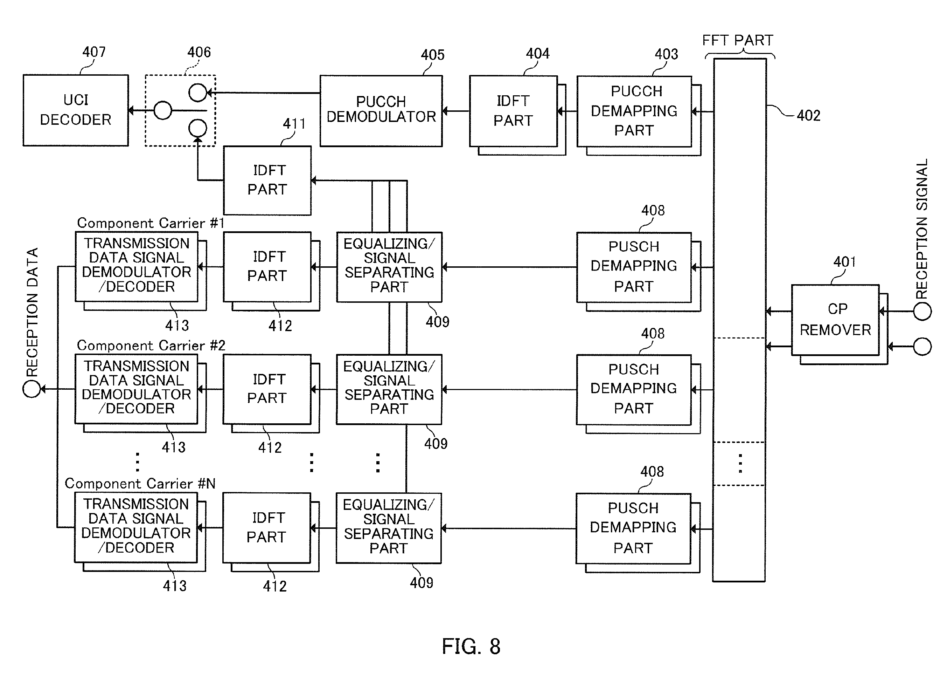

Next description is made, with reference to Fig. 8, about the functional structure of the baseband signal processing unit provided in the base station apparatus according to the present embodiment. Fig. 8 is a functional block diagram of the baseband signal processing unit in the base station apparatus according to the present embodiment. Fig. 8 is referred to about the uplink structure where transmission signals are transmitted from the mobile terminal apparatus to the base station apparatus. Illustrated in Fig. 8 is the base station configuration supporting the mobile communication system which comprises N component carriers (CC #1 to CC #N) in which two transmission layers are used in transmission.

As illustrated in Fig. 8, the baseband signal processing unit 204 has a CP remover 401, an FFT part 402, a PUCCH demapping part 304, and IDFT part 404, a PUCCH demodulator 405, a route switching part 406 and a UCI decoder 407. The CP remover 401 removes the cyclic prefix from the uplink channel signal and inputs the signal into the FFT part 402. The FFT part 402 performs fast Fourier transform on the CP-removed uplink channel signal and converts a time-series signal to a frequency-domain signal. Here, the FFT part 402 may be provided per component carrier independently.

The PUCCH demapping part 403 extracts the PUCCH signal which is mapped to the radio resources per transmission layer, and inputs the signal to the IDFT part 404. The IDFT part 404 performs inverse discrete Fourier transform on the PUCCH signal input from the PUCCH demapping part 403, converts from the frequency-domain signal to the time-series signal and inputs the converted PUCCH signal to the PUCCH demodulator 405.

The PUCCH demodulator 405 receives the PUCCH signal from the IDFT part 404 and demodulates the PUCCH signal for each of plural subcarriers. At this time, when there is no component carrier to transmit the PUSCH signal, the UCI signal is multiplexed into the PUCCH signal. When the UCI signal is multiplexed into the PUCCH signal, the PUCCH demodulator 405 inputs the UCI signal to the route switching part 406. When the UCI signal is multiplexed into the PUCCH signal, the route switching part 406 inputs the UCI signal to the UCI decoder 407. The UCI decoder 407 decodes the UCI signal.

Further, the baseband signal processing unit 204 has a PUSCH demapping part 408, an equalizing/signal separating part 409, IDFT parts 411, 412, and a transmission data signal demodulator/decoder 413. The PUSCH demapping part 408 extracts the PUSCH signal mapped to the radio resources per transmission layer and inputs the signal to the equalizing/signal separating part 409. The equalizing/signal separating part 409 removes channel distortion in phase and amplitude of each subcarrier from the PUSCH signal. When the UCI signal is multiplexed into the PUSCH signal, the equalizing/signal separating part 409 separates the transmission data signal from the UCI signal.

The IDFT part 411 receives the UCI signal separated from the equalizing/signal separating part 409, performs inverse Fourier transform on the UCI signal, converts from the frequency-domain signal to the time-series signal and inputs the converted UCI signal to the UCI decoder 407 via the route switching pat 406. The UCI decoder 407 decodes the UCI signal.

The IDFT part 412 receives the transmission data signal separated from the equalizing/signal separating part 409, performs inverse discrete Fourier transform on the transmission data signal, converts from the frequency-domain signal to the time-series signal and inputs the converted transmission data signal to the transmission data signal demodulator/decoder 413. The transmission data signal demodulator/decoder 413 demodulates the transmission data signal for each of plural subcarriers and decodes the demodulated transmission data signal. The transmission data signal demodulator/decoder 413 inputs the decoded transmission data signal to the transmission channel interface 206.

In this way, when the PUSCH signal is not transmitted in the same subframe as the UCI signal from the mobile terminal apparatus 10, the base station apparatus 20 obtains the UCI signal via the PUCCH signal. Besides, when the PUSCH signal is transmitted in the same subframe as the UCI signal from the mobile terminal apparatus 10, the base station apparatus 20 obtains the UCI signal via the PUSCH signal.

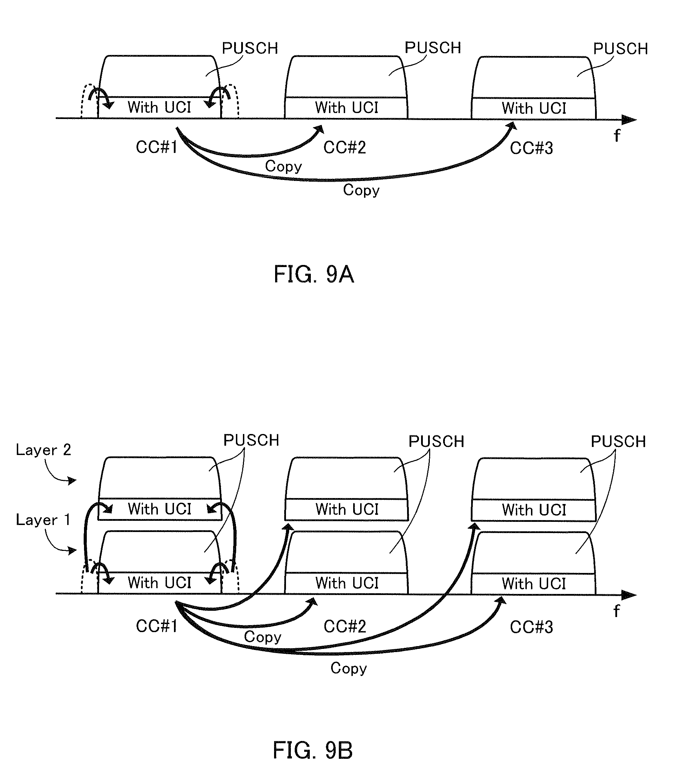

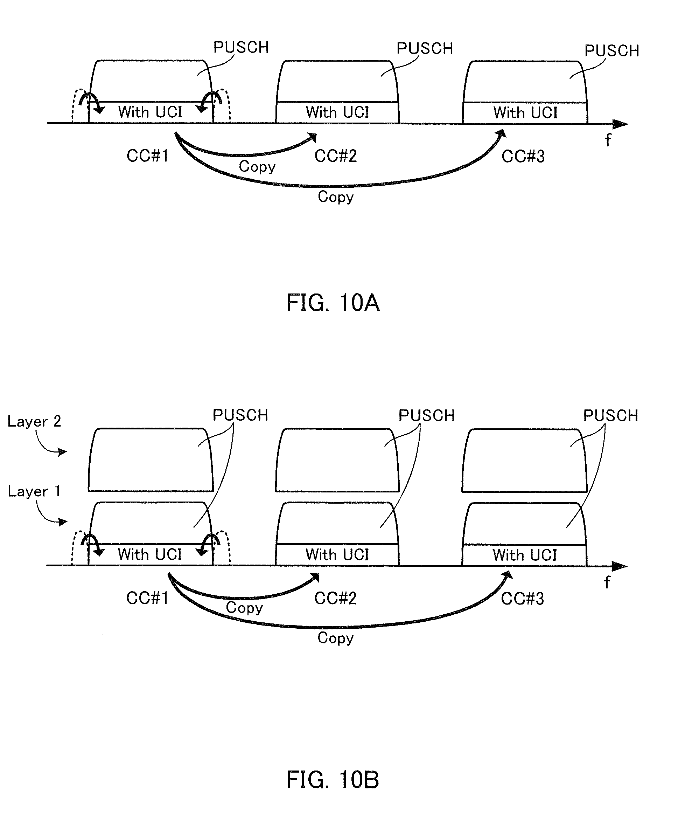

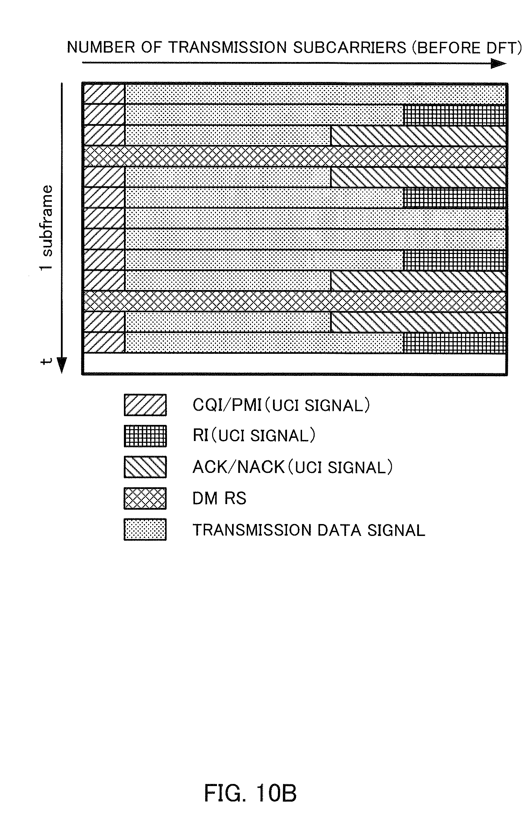

Next description is made, with reference to Figs. 9 to 11, about the method for transmitting a UCI signal. Fig. 9 is an explanatory view of a first method for transmitting a UCI signal. Fig. 10 is an explanatory view of a second method for transmitting a UCI signal. Fig. 11 is a view of configuration of the UCI signal multiplexed to the PUSCH signal. Here, as the method for transmitting a UCI signal when the UCI signal and the PUSCH signal are not transmitted in the same subframe is described above, its explanation is omitted here (see Fig. 3B). In Figs. 9 and 10, one-layer transmission and two-layer transmission are illustrated for description, however, the number of transmission layers is not limited and the present invention is applicable to three or more layer transmission.

As illustrated in Fig. 9A, in the one-layer transmission of the first transmission method, when the PUSCH signal is transmission in the same subframe as the UCI signal, the mobile terminal apparatus 10 multiplexes the UCI signal into the PUSCH signal for each of all component carriers in which the PUSCH signal is transmitted, and transmits it to the base station apparatus 20. For example, when the PUSCH signal is transmitted in the component carriers #1 to #3, the mobile terminal apparatus 10 replicates the UCI signal to multiplex to the PUSCH signal of the component carrier #1 and multiplexes the UCI signals to the PUSCH signals of the component carriers #2, #3.

As illustrated in Fig. 11, the UCI signal multiplexed to the PUSCH signal is multiplexed in the same symbol as the transmission data signal. For example, CQI, PMI, RI, ACK and NACK are transmitted as the UCI signal, the CQI and PMI are arranged at the lower side of the transmission data signal and the RI, ACK and NACK are arranged at the higher side of the transmission data signal. Here, arrangement of the UCI signal of Fig. 11 is give for illustrative purpose only and is not restrictive one. Any arrangement may be adopted as long as the UCI signal is arranged in the PUSCH.

Here, the mobile terminal apparatus 10 may be configured such that the UCI is mapped with a reduced coding rate instead of being merely replicated. In such a case, the mobile terminal apparatus 10 encodes the UCI signal repeatedly with the coding rate reduced to 1/3 and multiplexes the UCI signals to PUSCH signals of component carriers #1 to #3.

As illustrated in Fig. 9B, in the multiple-layer transmission of the first transmission method, when the PUSCH signal is transmitted in the same subframe as the UCI signal, the mobile terminal apparatus 10 multiplexes the UCI signal into the PUSCH signal in each of all transmission layers of all component carriers where the PUSCH signal is transmission and sends the signal to the base station apparatus 20. For example, when the PUSCH signal is transmitted in each of two transmission layers of each of the component carriers #1 to #3, the mobile terminal apparatus 10 replicates the UCI signal to multiplex to the PUSCH signal of the first layer of the component carrier #1, and multiplexes the UCI signal to the PUSCH signal of each of the second layer of the component carrier #1 and two transmission layers of the component carriers #2, #3.

Here, in multiple-layer transmission, transmission diversity between transmission layers may be applied. The transmission diversity may be performed by PVS (Precoding Vector Switching), SD-CCD (Small Delay Cyclic Delay Diversity) or the like. Accordingly, the transmission diversity is applied between transmission/reception antennas of the transmission layers, thereby increasing the reception quality level of the UCI signal transmitted via the transmission layers.

As illustrated in Fig. 10A, the one-layer transmission of the second transmission method is performed in the same way as the one-layer transmission of the first transmission method as described above. That is, when the PUSCH signal is transmitted in the same subframe as the UCI signal, the mobile terminal apparatus 10 multiplexes the UCI signal to the PUSCH signal in each of all component carriers where the PUSCH signal is transmitted, and sends the signal to the base station apparatus 20. Here, the mobile terminal apparatus 10 may be configured to map with a reduced coding rate instead of merely replicating the UCI signal.

As illustrated in Fig. 10B, in the multiple-layer transmission of the second transmission method, when the PUSCH signal is transmitted in the same subframe as the UCI signal, the mobile terminal apparatus 10 multiplexes the UCI signal to the PUSCH signal of the first layer of each of all component carriers the PUSCH signal is transmitted on and transmits the signal to the base station apparatus 20. For example, when the PUSCH signal is transmitted for each of two transmission layers of all component carriers #1 to #3, the mobile terminal apparatus 10 replicates the UCI signal to multiplex to the PUSCH signal of the first layer of the component carrier #1 and multiplexes the PUSCH signal of the first layer of each of the component carriers #2, #3. That is, in the multiple layer transmission of the second transmission method, replication of the UCI signal between the transmission layers is not performed.

Here, in transmitting plural layers of the second transmission method, there is need to perform MIMO signal separation processing on the UCI signal at the base station apparatus 20. This is because the UCI signal is transmitted only in one transmission layer of the plural transmission layers and the UCI signal is spatially multiplexed to s transmission data signal of another transmission layer. In the meantime, in transmission plural layers of the first transmission method, the UCI signal is transmitted in each of all transmission layers. Accordingly, it is possible to extract the UCI signal only and there is no need to perform the MIMO signal separation processing on the UCI signal. The MIMO signal separation processing is, for example, performed at the equalizing/signal separating processing part 409 of the base station apparatus 20.

As described above, according to the mobile terminal apparatus 10 of the present embodiment, in the mobile communication system of which the system band is composed of plural component carriers, the UCI signal is multiplexed to the PUSCH signal and transmitted in all component carriers where the PUSCH signal is transmitted in the same subframe. Accordingly, in the LTE-A system in which plural component carriers form a broader band, it is possible to adopt the transmission method of the UCI signal of the LTE system only with minor changes.

In the above description, in the multiple layer transmission of the second transmitting method, the UCI signal is multiplexed to the PUSCH signal of the first layer. However, this structure is not intended for limiting the present invention. The UCI signal may be multiplexed to the PUSCH signal of the second or later layer. Further, the UCI signal may be multiplexed to PUSCH signals of different transmission layers of respective component carriers.

Furthermore, the above description has been made by way of the case where the route switching part of the mobile terminal apparatus switches the destination of the UCI signal based on whether or not there if PUSCH signal in the same subframe as the UCI signal. In this case, the route switching part may be configured to be notified of the presence or absence of the PUSCH signal from any unit of the mobile terminal apparatus, for example, the PUSCH signal generator.

Furthermore, in the above description, when the PUSCH signal is transmitted in the same subframe as the UCI signal, the mobile terminal apparatus multiplexes the UCI signal only to the PUSCH signal. However, the UCI signal may be multiplexed to both the PUSCH signal and the PUCCH signal.

The present invention is not limited to the above-described embodiment and may be embodied in various modified forms. For example, allocation of component carriers, the number of processing units and parts, processing procedure, the number of component carriers and the number of component carrier groups in the above description may be modified appropriately. And any other modification may be made without departing from the scope of the present invention.

The present specification is based on Japanese Patent Applications No. 2010-030373 filed on February 15, 2010, the entire contents of which are expressly incorporated by reference herein.

## Claims

1. A mobile terminal apparatus comprising:
an uplink control information signal generator configured to generate an uplink control information signal to a base station apparatus of a mobile communication system having a system band composed of a plurality of fundamental frequency blocks;
a multiplexer configured to multiplex the uplink control information signal to an uplink shared data channel signal in each of all fundamental frequency blocks where the uplink shared data channel signal is transmitted in a same subframe as the uplink control information signal; and
a transmitter configured to transmit to the base station apparatus the uplink shared data channel signal to which the uplink control information signal is multiplexed.

2. The mobile terminal apparatus according to claim 1, wherein in transmission with use of a plurality of transmission layers, the multiplexer multiplexes the uplink control information signal to the uplink shared data channel signal in each of all transmission layers of all the fundamental frequency blocks in each of which the uplink shared data channel signal is transmitted in the same subframe as the uplink control information signal.

3. The mobile terminal apparatus according to claim 1, wherein in transmission with use of a plurality of transmission layers, the multiplexer multiplexes the uplink control information signal to the uplink shared data channel signal in at least one of transmission layers of all the fundamental frequency blocks in each of which the uplink shared data channel signal is transmitted in the same subframe as the uplink control information signal.

4. A method for transmitting an uplink control information signal, the method comprising:
a mobile terminal apparatus generating an uplink control information signal to a base station apparatus of a mobile communication system having a system band composed of a plurality of fundamental frequency blocks;
the mobile terminal apparatus multiplexing the uplink control information signal to an uplink shared data channel signal in each of all fundamental frequency blocks where the uplink shared data channel signal is transmitted in a same subframe as the uplink control information signal; and
the mobile terminal apparatus transmitting to the base station apparatus the uplink control information signal multiplexed to the uplink shared data channel signal.
